# EUROPEAN PATENT APPLICATION

(11) **EP 4 000 958 A1**
(43) Date of publication of application: **25.05.2022**
(21) Application number: 21180352.3
(22) Date of filing: 18.06.2021
(51) Int. Cl.: B60C 5/22, B60C 17/00, B60C 17/01

(54) **TIRE HAVING A PLURALITY OF CHAMBERS**

(30) Priority: 24.11.2020 IT 202000028163
(71) Applicant: Rc Tech S.r.l., 24060 Torre de' Roveri (BG) (IT)
(72) Inventor: CESARINI, Riccardo, I-24060 Torre de' Roveri, BERGAMO (IT)
(74) Representative: Crippa, Paolo Ernesto

(57) **Abstract**

The present invention relates to a tire (1) comprising:
- a tire carcass (2) on which a tread (3) with two opposite shoulders (4, 5) is arranged;
- from each shoulder (4 or 5), a flank (6 or 7) extends, ending in a bead (8 or 9) adapted to cooperate with an external bead surface (10 or 11) thereof with an edge (12 or 13) of a channel (14) of a rim (15) of a wheel (100) of a vehicle;
- said tread (3) and said flanks (6, 7) embrace a main chamber (16) on three sides;
- each of said flanks (6 or 7) comprises an internal flank surface (17) ;
- said tire (1) further comprises at least one bead seat wall (19) which is connected to two attachment portions (20, 21), separate from each other, of the internal surface (17) of at least one of said flanks (6 or 7), forming a bead seat chamber (22) with said at least one flank (6 or 7);
- wherein one of said attachment portions (20) is placed close to the bead (10 or 11) at which said at least one flank (6 or 7) ends; and wherein
- said bead (10 or 11) placed close to said attachment portion (20) comprises a bead projection (23);
- said bead projection (23) protrudes from the opposite side of said external bead surface (8 or 9) into said main chamber (16);
- said bead projection (23) forms a bead resting surface (24) which is connected to said at least one flank (6 or 7) and faces said bead seat wall (19) so that when said tire (1) is statically and/or dynamically stressed by the rolling of the wheel (100) of a vehicle, it allows the support of said bead seat wall (19) on said bead resting surface (24) .

## Description

### . Field of the invention

The present invention relates to a tire, and in particular, to a tire having a plurality of inflation chambers.

### . Background art

Tire construction technology has been established for decades by leading manufacturers. The structure of a tire basically includes the following elements:

Carcass: made of cord plies (generally arranged in a radial direction in road tires) embedded in a rubber compound, it has the task of containing the pressurized air (which serves the vertical load bearing function) and allowing the transmission of the stresses exchanged between the tread and the ground to the rim through the bead zone.

Bead: it is the zone where the tire is constrained to the wheel rim. It generally consists of a metal ring coupled to a bead filling zone for filling highly rigid polymer material which binds it to the carcass and thus allows the transfer of stresses. It is covered with a zone referred to as a "bead end" which seals the interface between the rim and the tire, thus preventing air from escaping (tubeless tire).

Belts: generally consisting of rubberized fabric or metal cords arranged according to an "intersection" angle and almost always surmounted by one or more layers of fabric arranged at zero degrees. The belts allow to provide torsional stiffness to the tread pattern and to transmit the tire/ground interchange forces (lateral cornering and traction/braking forces)

Tread: tire rolling surface. Made of high-adhesion polymer materials with wear resistance properties. It is variously sculpted ("tread pattern") to optimize grip, resistance to hydroplaning on wet surfaces, rolling noise, and mileage performance features (wear).

Flank: it is the zone protecting carcass and bead from impacts and external agents, and confers aging and fatigue resistance qualities.

The flank zone is the element of greater vertical and lateral flexibility. Therefore, it serves a primary function in ensuring the vertical deformability of the tire and the stiffness features thereof with respect to the lateral loads (lateral stability).

The pressurized air contained inside the tire serves the primary function of ensuring the structural support of the vertical load on the wheel and tensioning the tire structure itself, in order to generate and transmit the stresses (force and torque) exchanged with the ground.

Each tire has an optimal inflation pressure as a function of the features thereof (size, materials, construction, etc.) and the specific application (vehicle, load transported, etc.).

The correct inflation pressure is specified by the vehicle or tire manufacturer (generally a nominal value of ± 0.1 bar).

Insufficient inflation pressure values lead to a lower structural stiffness of the tire (i.e., to greater deformations and therefore to inferior grip and driving precision features), to anomalous distribution of contact pressures in the zone of the tread pattern (i.e., to irregular wear generally concentrated on the shoulders of the tread) potentially up to structural fatigue failure in the case of values below the safety limit.

Excessive inflation pressure values, on the other hand, make the tire too stiff, thus at the expense of road surface obstacle absorption features (less comfort and road holding), and may lead to a reduction in the size of the tread pattern, with a consequent decrease in grip and irregular wear (concentrated in the center zone of the pattern).

The ideal inflation pressure thus allows to optimize the "inflated" profile of the flank and of the tread crown and to optimize the distribution of the contact pressures between the tire and the ground.

Therefore, the ideal inflation pressure is that leading to the best compromise between the different performance features of the tire, in particular the ability to absorb obstacles (vertical vehicle comfort) and to generate high longitudinal and lateral forces (vehicle handling).

While, on the one hand, low pressures tend in fact to improve comfort features (vertical deformation of the tire structure), on the other hand, they may excessively penalize handling features (driving precision, grip, etc.) and in particular the lateral stability of the structure under load.

A deflated tire loses the vertical load support and drivability features thereof (directionality, cornering stiffness, etc.) to the point of running into the issue of debeading from the rim or of premature structural fatigue failure.

Some manufacturers produce tires with specific possibilities of running flat, by adequately reinforcing the flank zone with resistant polymer inserts ("bead seats") which ensure a minimum capacity of supporting the vertical load even if the tire is deflated. The "run-flat" distance is however limited to a few kilometers and low speed (generally max 80km/h) for safety reasons.

A tire subjected to a vertical or lateral force (exchanged between the tread and the ground) takes a deformed shape.

From this point of view, in a simplified but still significant manner, it is possible to schematize the tire as a spring and it is safe to state that vertical and lateral stiffness are functions directly proportional to the inflation pressure.

In simplified terms, therefore, it may be stated that the more inflated the tire, the stiffer it is vertically and laterally.

The stiffness of the "equivalent vertical spring" is generally defined "tire spring rate" and is one of the fundamental magnitudes for the purposes of the vertical dynamic behavior of the wheel coupled to the vehicle suspension and therefore for the purposes of the vertical comfort and road holding features of the vehicle (absorption of obstacles and capability of keeping the wheel in contact with the ground).

As a first approximation, it is possible to state that the vertical stiffness of the tire is proportional to the inflation pressure.

In fact, pressurized air is the most significant structural element in supporting the vertical load.

Generally, the first measurement with respect to the vertical and lateral features is carried out statically (i.e., without the wheel rolling).

Various measurement methods exist to determine the vertical stiffness even in the dynamic model (i.e., with a rolling tire), and in this case, reference is made to "dynamic vertical stiffness" values.

Under dynamic rolling conditions, imparting a steering angle to the wheel leads to the generation of lateral forces which allow and adjust the curvilinear motion of the vehicle on the horizontal plane.

Due to the deformability of the tire, the actual advancement direction of the wheel forms an angle with respect to the center plane of the rim, referred to as the cornering angle or tyre slip angle.

In a simplified manner, it may be stated that the characteristic lateral force vs cornering angle is linear at least in the first part (i.e., for low cornering angles, i.e., for limited lateral forces and therefore limited lateral accelerations of the vehicle). The slope of the characteristic "Lateral force vs cornering angle" curve is defined as "cornering stiffness" and is one of the primary features of the tire to determine the handling performance of the vehicle.

It is worth noting that the tire cornering features are strongly influenced by the inflation pressure.

In the literature, several models for schematizing the cornering behavior of the tire exist.

In a simplified manner, it is possible to state that the cornering stiffness of the tire may be schematized as the sum of two springs in series: the relative one, due to the structural contribution (carcass, bead, flanks tensioned by the inflation pressure) and the one due to the contribution of the tread unit (belts and tread band).

Basically, as the inflation pressure increases, the equivalent stiffness of the "structural" spring increases. The same happens for the "tread" spring, where, however, once an optimal value has been exceeded, the effect suddenly tends to reverse (this is due to the progressive decrease of the pattern area as the pressure increases).

A similar argument also applies to the capability of the tire to transmit longitudinal forces (in traction or braking). In this case, the longitudinal force is a function of the "longitudinal sliding" and for a first phase of the longitudinal dynamics it is a linear function.

Also in this case, the inflation pressure has a primary effect in determining the related feature (sliding stiffness).

The inflation pressure thus plays a primary role both in terms of vertical comfort and road holding features and in terms of tire cornering features, and therefore in terms of vehicle handling behavior.

Solutions are known from documents WO2020110420 to BRIDGESTONE, KR101834926 to NEXEN TIRE, WO201457282 to FUSION INNOVATIONS, KR100922287 to KUMHO TIRE, US3994329 to KLEBER, FR2087349 to KLEBER COLOMBES, GB1507082A to KLEBER COLOMBES, providing a pneumatic wheel in which a second inflatable element is inserted.

For example, said element consists of a rubber chamber which is expandable on the flanks but is constrained, according to the radial dimension, within a certain diameter by resistant elements (resistant cords of textile material embedded in the rubbery material of the secondary chamber which allow to restrain the circumferential dimension).

Said secondary chamber is inserted into the cavity formed between the rim and the tire and is inflated with air through a specific secondary valve present on the rim.

The upper part of the tire, i.e., the tread zone, the connection zone between the tread and the flank ("sidewall"), and the upper part of the flanks themselves remain instead subject to the inflation pressure of the tire itself.

The presence of the secondary element allows to obtain two distinct volumes inside the tire which allow to provide the tire with load-bearing features in case of a puncture (run-flat).

The concept of double chamber (or multiple chambers) has been already referenced in patents in the first half of the 1900s, with great activity by all manufacturers.

In most cases, the solutions relating to the presence of the internal secondary chamber (and to a higher pressure than the primary tire chamber) refer to two effects:
1- ensuring a better air tightness between the bead and the rim and avoiding the debeading of the tire from the rim under high lateral load;
2- providing a vertical load lift contribution in the case of puncturing the main chamber of the tire (run-flat effect).

However, explicit references to the lateral stabilization effect exist, in particular, under the effect of high transverse forces acting on the tire (see in particular US2898969 and GB878310).

However, regardless of the multiplicity of known solutions, after almost a century of ideas and experiments, this concept, to date, has not found an outlet on the market except in highly particular applications.

At present, the only two noteworthy uses relate to the field of off-road bicycles (mtb) and US car racings.

In the first case, the secondary chamber, by pressing with a strong pressure against the tire bead and thus ensuring air tightness and avoiding debeading, allows the tire to work at highly low pressures with excellent obstacle absorption capacity, large pattern areas, and thus grip on muddy, slimy, and uneven surfaces, and great puncture resistance (the best known systems are Schwalbe ProCore and DeanEasy).

In the second case (specified in NASCAR regulation for racing on oval circuits), the secondary chamber is an actual internal tire ("inner liner") the purpose of which is not to modify the dynamic features of the actual tire, but to ensure lift and safety in case of a puncture (run-flat effect).

The solution dates back to 1989 (US4995438) and is from Goodyear which, being the official supplier of the Series, has concretely developed the construction solution. However, a variety of solutions from other Manufacturers exist, with particular regard to the interface zone between the inner liner and the external tire, to allow the passage of air during the assembly step and the pressurization of the two chambers (in particular Hoosier Tyre, Michelin, and Bridgestone patents relating to the "ribbing" of the secondary chamber or the liner of the main tire).

In fact, the bead zone of the secondary chamber (which is inflated through a specific valve) presses against the bead zone of the external tire. The second valve is positioned precisely at this interface between the two beads, which also allows the external tire to be pressurized (see the Goodyear Tires Racing Manual for assembly details). Therefore, to allow the passage of air, the walls of the liner are shaped with grooves of various geometries. See US5273093, US06688359, US20090000714.

The modest diffusion of the concept of double (or multiple) chamber lies in the apparent disadvantages linked to the manufacturing complexity (de-standardization of the rim/tire system, number of elements, assembly difficulties, weight, etc.) but also in the limited exploration of potential handling advantages.

In fact, except in the case of the bicycle, where performance benefits are very apparent, in the automotive field the application was solely focused on the run-flat features. When used in NASCAR, the guarantee of safety when running flat is precisely the only sought-after feature.

In fact, the inner liner does not interact (if not negligibly) with the tire in the "usual" vehicle handling steps.

Therefore, the need to improve the "bi-modal" feature of the tire, i.e., to separate the vertical and lateral features of the tire, remains strongly felt.

Furthermore, the need to achieve excellent handling performance, managing the vertical and lateral stiffness features in a controlled manner on one side of the tire, in particular the external side, i.e., the side which remains facing the exterior of the vehicle, remains strongly felt.

In driving dynamics, in fact, it is the external flank which plays a primary role in "absorbing the lateral load".

Therefore, it is the issue underlying the present invention to devise a tire which has structural and functional features such as to meet the aforesaid needs while solving the drawbacks mentioned with reference to the prior art.

Obtaining a better handling performance is a technical issue linked to how to place and constrain the secondary chamber. In fact, some lateral reaction is necessary for the secondary chamber to be capable of pushing with pressure against the external flank of the tire.

The construction solution to this technical issue is anything but trivial. It is possible to imagine the secondary chamber "integrated" into the rim or into the tire. In one case or another, one or the other product (or both) would be de-standardized, thus creating a significant drawback which is to be overcome.

### . Solution

It is the object of the present invention to suggest a tire capable of solving the several and sometimes conflicting needs set out above.

This and other objects and advantages are achieved by a tire according to claim 1, as well as a wheel according to claim **8,** as well as inflation methods according to claims **10, 11, 13** and **14.**

Some advantageous embodiments are the subject of the dependent claims.

From the analysis of this solution it emerged that, by virtue of the suggested solutions, it is "as if" one was dealing with a tire with different internal and external fitting diameters (the external diameter being the largest).

These solutions lead to the following additional advantages:
- reduction of the volume of the internal chamber with consequent weight benefit;
- easy air supply to the two chambers;
- possibility of activating the adjustment of the pressure in the secondary chamber in the light of the lower energies involved, due to the small volume of the secondary or bead seat chamber.

The suggested solutions appear decidedly innovative and rich in functional values.

The presence of the bead seat chamber with support bead allows to obtain two distinct volumes inside the tire inflated up to different pressure values, and to optimize the vertical, lateral, cornering, tractive/braking performance features by independently adjusting the two different inflation pressure values ("bi-modal tire").

The present double chamber solution with bead seat with support bead allows to obtain geometric and mechanical features (inflated profile, pressure distribution under the pattern area, stiffness, etc.) and therefore comfort, road holding and handling performances (vertical, cornering lateral, longitudinal under torque, combined, etc.) not possible with a traditional tire, i.e., without the presence of the secondary chamber. In particular, the bi-modal tire allows to:
I. Decouple the vertical and lateral/cornering features --> optimization of vertical comfort vs handling performance;
II. Manage the flank flexibility ("as if the tire had a variable aspect ratio") in an optimized manner;
III. Manage flank and pattern profile in an optimized manner --> grip, wear, rolling resistance, hydroplaning, degradation.

In a simplified but still significant manner, with respect to the vertical degree of freedom, it is possible to schematize the tire as the set of two springs in series, each representing the distinct volume of air at different pressure.

Such springs will have different stiffness values, which will be a function of the respective inflation pressures of the two air volumes.

From the point of view of the overall vertical stiffness of the tire, the feature of the most yielding spring will prevail (principle of springs in series).

From the point of view of lateral yielding, the stiffness contribution of the bead seat chamber, which, by virtue of the upper inflation pressure thereof will provide the tire with a greater capacity to withstand lateral loads without excessive deformations (lateral stability), will be decisive.

From the point of view of the vertical and lateral behavior of the tire, the presence of the bead seat chamber and the two distinct volumes at different pressure inside the tire itself will thus allow to "decouple" the vertical and lateral stiffness features.

Therefore, by appropriately adjusting the two pressure values (main chamber and bead seat chamber) it will be possible to maximize almost independently the vertical absorption capacities (comfort and road holding) and the lateral and cornering stiffness capacities (handling).

The combination of high pressure values inside the bead seat chamber and pressure values which are even lower than the nominal one (or ideal for tubeless tires) inside the tire will allow to maximize both comfort and handling features.

It is therefore much easier to find the best vehicle setup as a function of the specific application.

By appropriately adjusting the circumferential size (height) and the geometric and constructive features of the bead seat chamber together with the related inflation pressure, it is substantially possible to modify the flexibility features of the tire flank.

In other words, the presence of the bead seat chamber and of the bead with a resting surface may strongly stiffen that part of the flank close to the bead zone and may reduce the height of the most flexible zone of the tire flank.

From this point of view, the adequate setting of the pressure inside the bead seat chamber allows to provide the tire with features more or less close to those of a lowered tire.

Therefore, an effect similar to that deriving from the reduction of the tire aspect ratio (reduction of the height of the flank section and simultaneous increase of the rim diameter) is obtained "as if", in fact, the aspect ratio itself was variable and adjustable as a function of the inflation pressure and/or the features of the bead seat chamber and the bead resting surface.

The choice of adequate values for the two inflation pressures allows to change the shape of the profile of the entire tire flank and the distribution of pressures under the pattern area.

It is essential to remember that such features (profile and distribution of contact pressures) play a decisive role for the purposes of all the main performance features of the tire: grip, directionality, handling performance, tread wear, regularity of tread wear, obstacle absorption, rolling resistance, hydroplaning resistance, thermal degradation resistance, etc.

The present invention allows, by appropriately setting the values of the two distinct inflation pressures, to optimize the desired performance features as a function of the specific use and to make the tire itself more adaptable and "adjustable".

In case of a puncture of the tire and therefore of the related loss of pressure in the main chamber, the bead seat chamber with the bead may allow to ensure limited vertical load support features and to prevent the sudden debeading from the rim.

Therefore, the bead seat chamber with the bead confers "run-flat" features to the tire, even if, obviously, for short mileage, low speed, and performance to be expressed.

### . Figures

Further features and advantages of the tire according to the invention will become apparent from the following description of preferred embodiments thereof, given by way of non-limiting example, with reference to the accompanying drawings, in which:

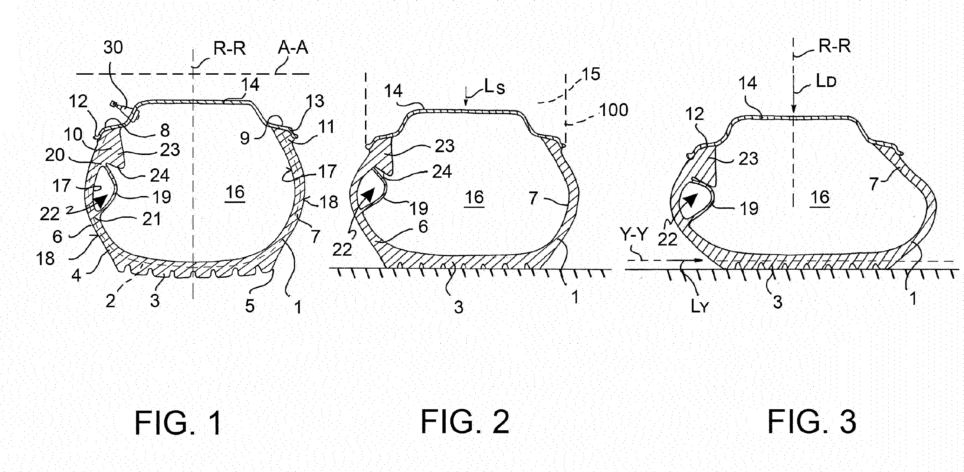

- Figure 1 depicts, in a radial and axial and cross section with respect to the circumferential extension of a tire, a tire mounted on a rim under static conditions, inflated and raised from the ground;
- Figure 2 shows, again in a cross section with respect to the tire, the tire in Figure 1 when the vehicle on which it is mounted rests on the ground but stationary;
- Figure 3 depicts, again in a cross section, the tire in Figure 1 when the vehicle on which it is mounted is under running and cornering conditions;

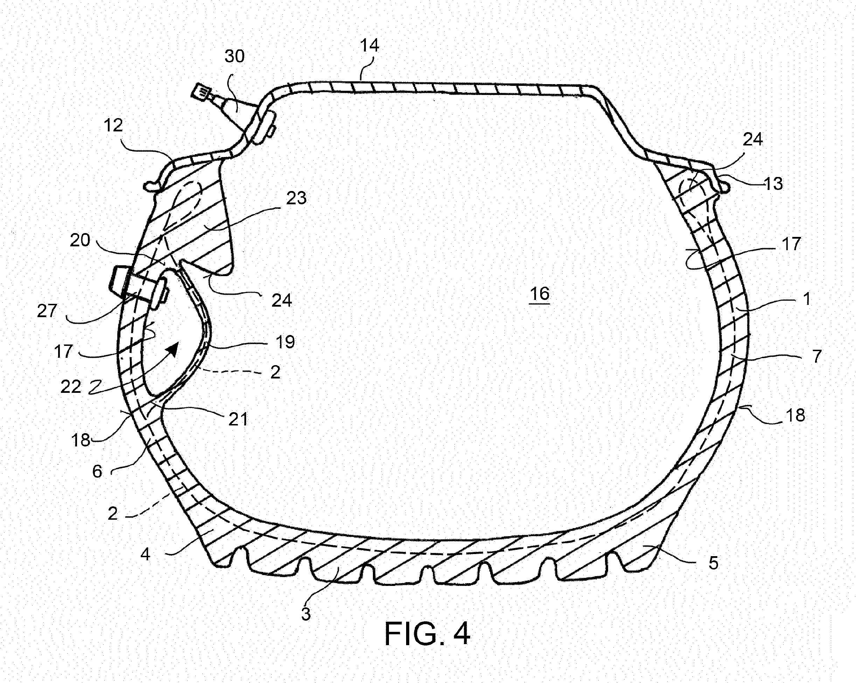

- Figure 4 depicts, in a cross section, a tire mounted on a rim according to a further embodiment, in which a bead seat chamber is provided on the external flank of the tire and a bead seat valve is provided in the tire flank;

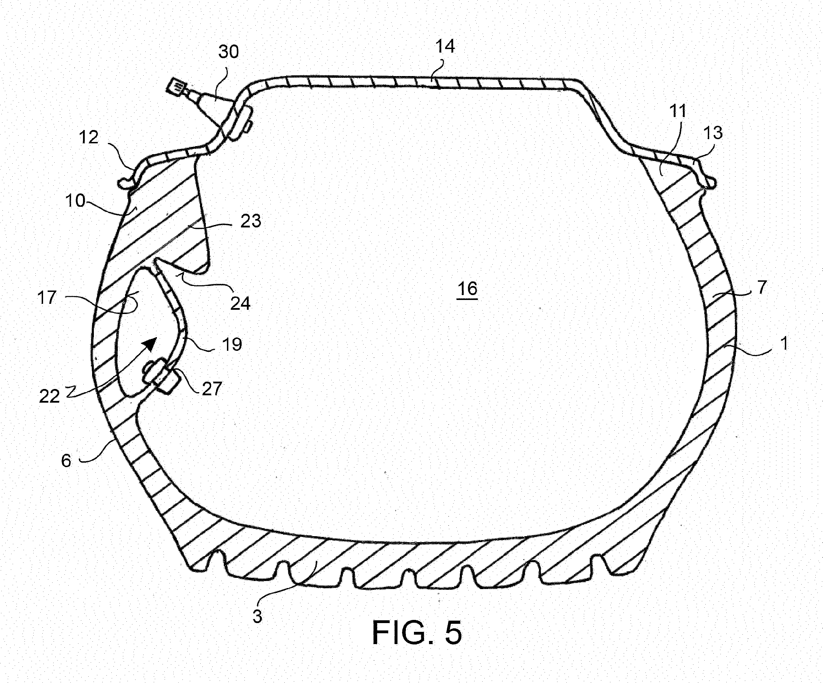

- Figure 5 shows, in a cross section, a tire mounted on a rim according to a further embodiment, in which a bead seat valve is provided in the bead seat wall;

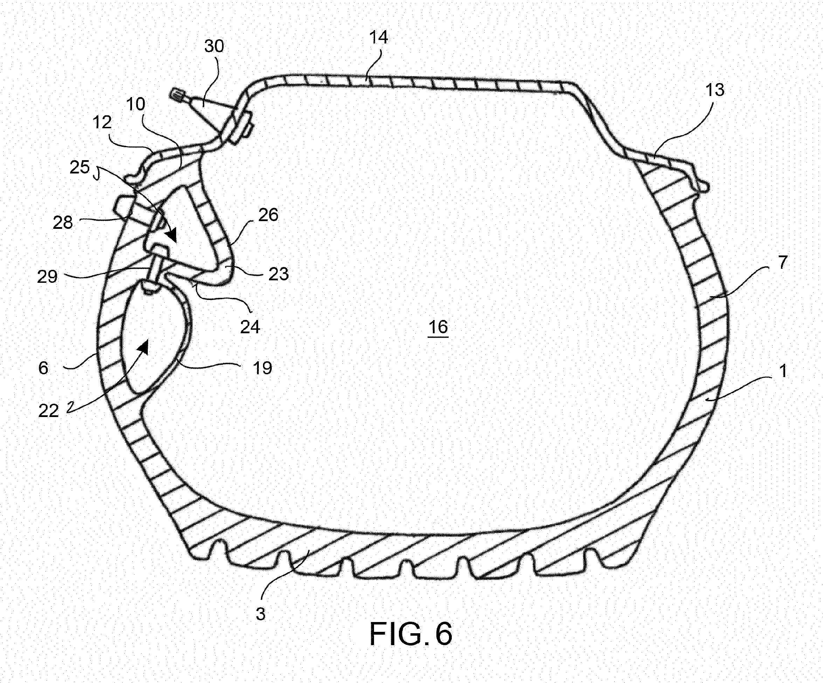

- Figure 6 shows, in a cross section, a tire mounted on a rim according to a further embodiment, in which the bead projection forms a bead chamber and a bead valve is arranged to be accessible from outside the tire, and furthermore a valve between chambers allows to selectively connect the bead chamber and the bead seat chamber;

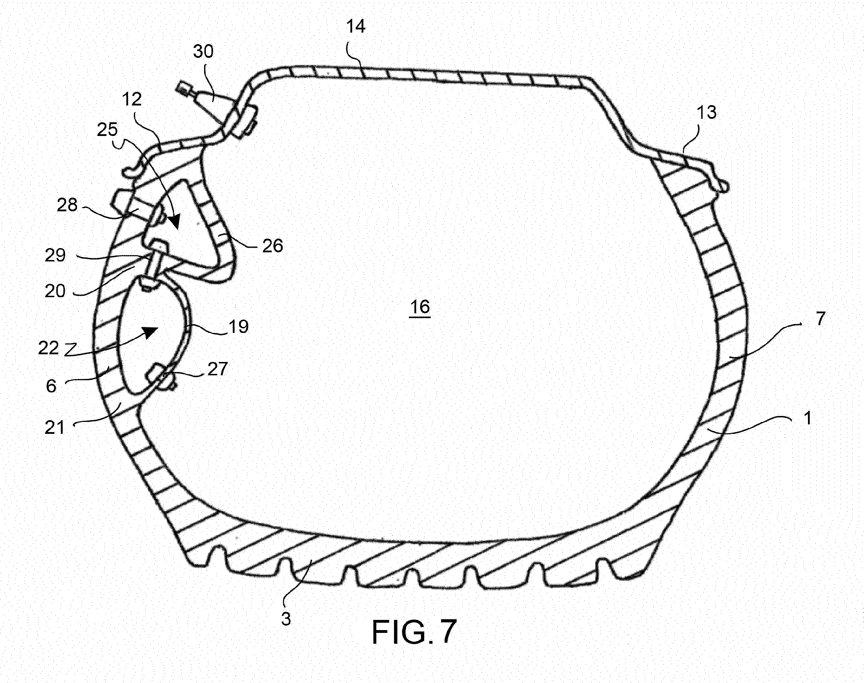

- Figure 7 shows, in a cross section, a tire mounted on a rim according to a further embodiment, in which a solution similar to that in Figure 6 is provided and in which a bead seat valve is further provided in the bead seat wall;

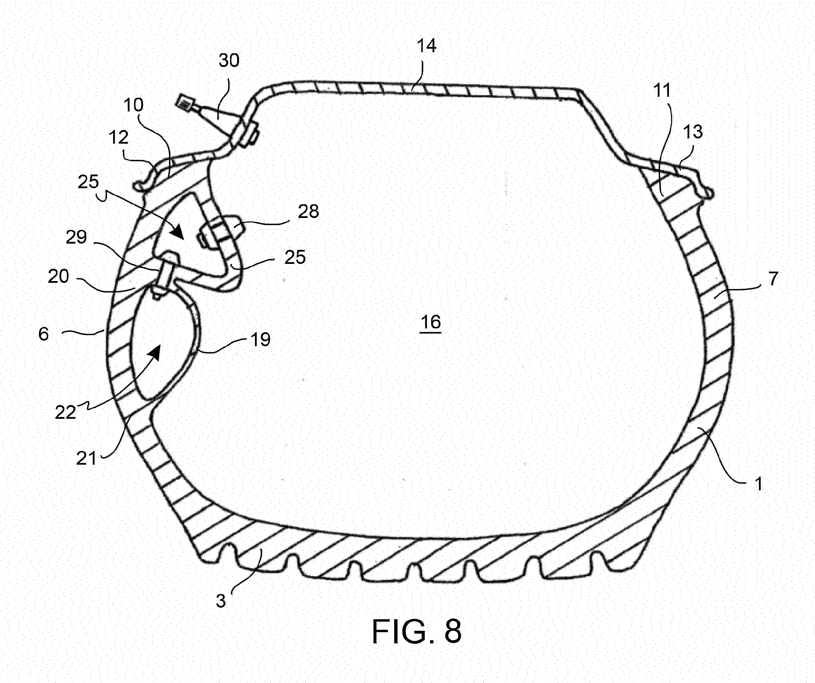

- Figure 8 shows, in a cross section, a tire mounted on a rim according to a further embodiment, in which the bead projection forms a bead chamber and a bead valve is arranged in the bead wall, and furthermore a valve between chambers allows to selectively connect the bead chamber and the bead seat chamber;

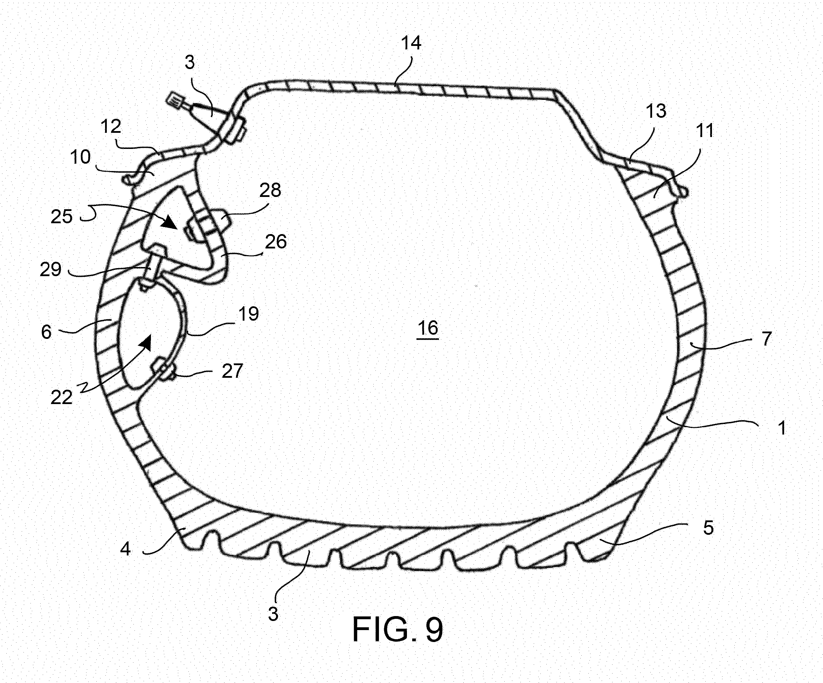

- Figure 9 shows, in a cross section, a tire mounted on a rim according to a further embodiment, in which a solution similar to that in Figure 8 is provided and in which a bead seat valve is further provided in the bead seat wall.

### . Description of some preferred embodiments

Radial direction R-R is defined below as a direction orthogonal to the tread 3 which entirely rests on a ground, for example a road.

The direction transverse to the radial direction Y-Y or axial direction A-A is defined as a direction parallel to the ground or road or a direction parallel to the vehicle wheel rotation axis.

In accordance with a general embodiment, a tire 1 comprises a tire carcass 2 on which a tread 3 with two opposite shoulders 4, 5 is arranged.

From each shoulder 4 or 5, a flank 6 or 7 extends, ending in a bead 8 or 9 adapted to cooperate with an external bead surface 10 or 11 thereof with an edge 12 or 13 of a channel 14 of a rim 15 of a wheel 100 of a vehicle.

Said tread 3 and said flanks 6, 7 embrace a main chamber 16 on at least three sides.

Each of said flanks 6 or 7 comprises an internal 17 and an external 18 flank surface.

Said tire 1 further comprises at least one bead seat wall 19 which is connected to two attachment portions 20, 21, separate from each other, of the internal surface 17 of at least one of said flanks 6 or 7, forming a bead seat chamber 22 with said at least one flank 6 or 7.

One of said attachment portions 20 is placed close to the bead 10 or 11 at which said at least one flank 6 or 7 ends.

Said bead 10 or 11 placed close to said attachment portion 20 comprises a bead projection 23.

Said bead projection 23 protrudes from the opposite side of said external bead surface 8 or 9 into said main chamber 16.

Said bead projection 23 forms a bead resting surface 24 which is connected to said at least one flank 6 or 7 and faces said bead seat wall 19 so that when said tire 1 is statically and/or dynamically stressed by the rolling of the wheel 100 of a vehicle, it allows the support of said bead seat wall 19 on said bead resting surface 24.

In accordance with an embodiment, said bead seat wall 19 and said flank 6 or 7 form said bead seat chamber 22 entirely delimited by said bead seat wall 19 and said internal flank surface 17.

In accordance with an embodiment, close to said bead 10 or 11, said bead seat wall 19 is connected to said flank 6 or 7 substantially in a direction orthogonal to said internal flank surface 17.

In accordance with an embodiment, said bead resting surface 24 is connected to said flank 6 or 7 substantially in a direction orthogonal to said internal flank surface 17.

In accordance with an embodiment, only one flank 6 or 7 is connected to said bead seat wall 19.

In accordance with an embodiment, only one flank 6 is connected to said bead seat wall 19 and it is the external flank 6 which will be mounted on the rim 15 so as to remain on the side externally facing the vehicle on which the wheel 100 will be mounted.

In accordance with an embodiment, said bead projection 23 is hollow and forms a bead chamber 25, in which said bead chamber 25 is closed by a bead wall 26.

In accordance with an embodiment, a bead seat valve 27 is provided for the inflation and deflation of the bead seat chamber 22.

In accordance with an embodiment, a bead seat valve 27 is provided for the inflation and deflation of the bead seat chamber 22; in which said bead seat valve 27 crosses said flank 6 or 7 and allows the inflation and deflation of the bead seat chamber 22 from outside the tire 1 even when this is mounted on a rim 15.

In accordance with an embodiment, a bead seat valve 27 is provided for the inflation and deflation of the bead seat chamber 22; in which said bead seat valve 27 crosses said bead seat wall 19 and allows the inflation and deflation of the bead seat chamber 22 from the interior of the main chamber 16.

In accordance with an embodiment, a bead valve 28 is provided for the inflation and deflation of the bead chamber 25.

In accordance with an embodiment, a bead valve 28 is provided for the inflation and deflation of the bead chamber 25; in which said bead valve 28 crosses said flank 6 or 7 and allows the inflation and deflation of the bead chamber 25 from outside the tire 1 even when this is mounted on a rim 15.

In accordance with an embodiment, a bead valve 28 is provided for the inflation and deflation of the bead chamber 25; in which said bead valve 28 crosses said bead wall 26 and allows the inflation and deflation of the bead chamber 25 from the interior of the main chamber 16.

In accordance with an embodiment, a valve 29 between chambers is provided, which crosses said bead wall 26 and said bead seat wall 19, putting said bead chamber 25 and said bead seat chamber 22 into fluid connection for the inflation and deflation of the bead seat chamber 22.

In accordance with an embodiment, a valve 29 between chambers is provided, which crosses said bead wall 26 and said bead seat wall 19, putting said bead chamber 25 and said bead seat chamber 22 into fluid connection, in which said valve 29 between chambers is a one-way valve for the inflation of the bead seat chamber 22.

In accordance with an embodiment, a bead seat valve 27 is provided for the deflation of the bead seat chamber 22; in which said bead seat valve 27 crosses said bead seat wall 19 and is a one-way valve which allows the deflation of the bead seat chamber 22 in said main chamber 16.

In accordance with an embodiment, at least one of said
- bead seat valve 27 and/or
- bead valve 28 and/or
- valve between chambers 29
is an adjustable valve for setting the maximum pressure required by the bead seat chamber 22 and/or the bead chamber 25; or is a sensorized valve for detecting the pressure and/or temperature of the bead seat chamber 22 and/or of the bead chamber 25.

The present invention also relates to a wheel 100 of a vehicle, comprising at least one tire as described in any one of the embodiments described above, as well as a rim 15.

In accordance with an embodiment, said rim 15 is a standard rim provided with a main inflation and deflation valve 30 or a main valve for the inflation and deflation of the main chamber 16.

In accordance with an embodiment, said rim 15 comprises a rim channel 14 delimited by two opposite rim edges 12, 13. Said main chamber 16 is embraced by said tread 3, said flanks 6, 7, and said rim channel 14.

The present invention also relates to a method for inflating a tire 1, including at least the following steps
- providing a tire according to any one of the embodiments described above, in which the bead seat valve 27 is provided in said flank 6 or 7;
- providing a rim 15;
- inflating said bead seat chamber 22 before or after inflating said main chamber 16.

The present invention also relates to a method for inflating a tire 1, including at least the steps of:
- providing a tire according to any one of the embodiments described above, where the bead seat valve 27 is provided in said bead seat wall 19;
- providing a rim 15;
- inflating said bead seat chamber 22 and only then mounting said tire 1 on said rim 15;
- inflating said main chamber 16.

According to a variant of the method:
- said bead seat chamber 22 is inflated at a higher pressure than said main chamber 16.

The present invention also relates to a method for inflating a tire 1, including at least the following steps:
- providing a tire according to any one of the embodiments described above, in which the bead valve 28 is provided in said flank 6 or 7;
- providing a rim 15;
- inflating said bead chamber 25 before or after inflating said main chamber 16.

The present invention also relates to a method for inflating a tire 1, including at least the following steps:
- providing a tire according to any one of the embodiments described above, in which the bead valve 28 is provided in said bead wall 26;
- providing a rim 15;
- inflating said bead chamber 25 and only then mounting said tire 1 on said rim 15;
- inflating said main chamber 16.

According to a variant of the method:
- said bead chamber 25 is inflated at a higher pressure than said main chamber 16;
   or
- said bead chamber 25 is inflated at a higher pressure than said bead seat chamber 22 and said bead seat chamber 22 is inflated at a higher pressure than said main chamber 16;
   or
- said bead chamber 25 is inflated at a higher pressure than said main chamber 16 and said bead seat chamber 22, in order to obtain a high stiffness of the bead resting surface 24 and to act as an air tank for supplying and adjusting at least the bead seat chamber 22.

Some further constructional variants of the invention will be described below.

Cavities are obtained inside the structure of the external flank 6 or 7 of the tire 1, which, once pressurized (p2), become actual rigid "pneumatic bead seats" 22 such as to increase the flexural stiffness of the flank 6 or 7 itself.

Such pneumatic bead seats 22 have a privileged location at the external surface of the flank itself or at the internal surface of the external flank of the tire.

Once these bead seats 22 have been pressurized (p2), they increase the flexural resistant moment of the affected flank zone 6 or 7 and the related overall flexural stiffness of the flank 6, for example the external one.

From a schematic point of view, it is "as if", by pressurizing one or more bead seats (cavity or bead seat chamber 22), additional rigid elements were introduced into the geometry of the flank 6 or 7, similar to the "bead seats" made of polymer material which are typical of run-flat tires.

The flank 6 or 7 thus stiffened may affect all aspects of vehicle dynamics already for low levels of stress, i.e., lateral acceleration (linear zone of the driving behavior).

From the point of view of vertical comfort, on the other hand, the pressure p1 inside the main chamber 16 remains predominant together with the greater flexibility of the internal flank 7 of the tire 1.

In other words, all the benefits described in the previous pages are obtained upon the decoupling of the vertical features from the lateral and cornering features of the tire 1.

Such bead seats or bead seat chambers 22 may be preferably integrated either in the "inner liner" (the inner liner is the rubbery layer (butyl) which forms the internal surface of the tire 1 and which has the task of making the tire impermeable to the passage of air) or coupled to the layers of polymer material forming the external zone of the flank 6 or 7, or in the structure of the tire carcass 2. Therefore, from the point of view of the manufacturing process, these are specific semi-finished products which are prepared before the step of packaging the tire 1.

Such semi-finished products may already be equipped with a micro-valve 27 to be coupled (always in the first packaging step) to the ring and filling of the bead 10 or 11 to form the "air intake" duct accessible from outside.

The "secondary valve module" or bead seat valve 27, suitably sized to be integrated with the various elements of the flank 6 or 7 of the tire 1, may in fact be incorporated into the bead zone (consisting of the generally metal sealing ring and of the filling zone (bead filler) of the bead 10 or 11 itself), which may be considered as an infinitely rigid constraint element.

The secondary valve module or bead seat valve 27 may also be suitably miniaturized and may incorporate a resistant element suitably sized and capable of absorbing and damping any impacts (usually against the sidewalk) to which this module may be exposed. The valve module and the protective resistant element may be suitably recessed and further protected externally by the rim-saving curb generally present on the external flank of the tire 1.

The secondary valve module 27 itself may also integrate a specific pressure sensor with a system for transmitting the data (pressure) to a suitable acquisition and processing system.

Alternatively or as a complement to the manufacturing of the pneumatic bead seats 22, at the internal zone of the flank, an actual internal secondary chamber may be made, consisting of a liner, suitably reinforced and therefore with controlled deformability as a function of the secondary pressure p2 of the bead seat chamber 22.

As the inflation pressure p2 increases, such a chamber 22 protrudes into the primary or main chamber 16, taking a predetermined geometry.

When the tire 1 is deformed upon the development of relevant forces (lateral, vertical and cornering) in the curvilinear motion of the vehicle, the bead seat chamber 22 is squeezed between the external flank 6 of the tire 1 and the bead 10, thus originating the effect of a "reaction wedge" and thus exerting the specific pressure (p2 > p1) on the affected portion of the external flank 6 of the tire 1.

It is precisely at this point that the bead seat chamber 22 limits the deformability of the affected zone of the external flank 6 on which it acts. Such an affected flank zone may be more or less extended, depending on the geometry of the elements, the deformation state of the tire 1 (i.e., the state of stress), and the inflation pressures of the main chamber 16 and of the bead seat chamber 22.

To all intents and purposes it is "as if" the tire 1 was further lowered on the external flank 6 (tire lowered asymmetrically with respect to the internal flank 7) and/or in any case more rigid laterally at the external flank 6.

It is precisely the generation of the "wedge" effect given by the bead resting surface 24 which provides the bead seat chamber 22 with a constraint reaction with the rim 15, solving in an innovative manner the technical issue, of not easy solution, of finding a location and a constraint reaction for the secondary chamber.

Also in the case of the secondary chamber, the manufacturing process may be conceived on an industrial scale since the bead seat chamber 22 and the secondary valve module 27 may be directly placed during the step of "structural forming process" of the tire 1.

With regard to the use of such a bi-modal tire solution, the assembly sequence of the rim/tire assembly remains unchanged, with the sole addition of the last step of inflating the secondary chamber/s:
**.** the tire 1 is mounted on the wheel rim 15 thereof
**.** the tire 1 and the rim 15 abut, introducing air from the main valve of the rim 30 and bringing the main chamber 16 up to the pressure p1
**.** the pneumatic bead seat chambers 22 are brought to the desired pressure p2 through the specific secondary valve module 27 (p2 > p1).

In the process of disassembling the assembly, such steps are carried out in reverse order.

Once the assembly has been assembled, the inflated profile of the tire 1 not subjected to stress (static situation) remains in perfect balance under the primary inflation pressure p1.

The present invention collects and optimizes the many considerations resulting from the previous studies developed in recent years.

It allows to drastically simplify all the construction aspects of the system consisting of [rim + tire + double/multiple chamber], the mutual (physical) connections and interactions between rim and tire required to allocate one or more secondary air chambers, the sequence for assembling the assembly and pressurizing the assembly.

Having recognized such complexity factors as the actual impediment to the market development of multiple chamber rim/tire solutions (despite a century of only theoretical solutions), it is believed that the present invention finally allows the development of a large-scale industrial solution.

Although, in fact, the tire has an increased component complexity, it is believed that the solution is achievable with a specific design of the product (tire) and of the manufacturing process.

As said, the present invention is applied to a usual wheel rim 15. Construction solutions may also be developed with a rim specially designed, including an optimized secondary rim/chamber reaction zone.

From the functional point of view, the present invention therefore allows to:
- make use of all the functional advantages described in the previous pages in relation to a pneumatic wheel inside which there are two or more chambers with different pressures (bi-modal tire), in particular allowing to separate the vertical and horizontal features of the tire during operation in order to:
   Decouple the vertical and lateral/cornering features --> optimization of vertical comfort vs handling performance;
   Manage the external flank flexibility ("as if the tire had a variable aspect ratio") in an optimized manner;
   Manage the external flank and pattern profile in an optimized manner --> improvement of grip, wear, rolling resistance, hydroplaning, degradation resistance;
   Provide the tire with load-bearing features in case of a puncture (run-flat);
- Apply such a bi-modal tire to any wheel rim, without the need to de-standardize the latter and to provide additional elements for pressurizing the secondary chamber/s
- Significantly reduce the size and weight of each secondary chamber and the related valve;
- Give the possibility of infinite optimizations of the vehicle handling and comfort/road holding features, by appropriately adjusting the torque (or n-tuple) of the pressure values of the main (p1) and secondary (p2-pn) chamber/s.

The (business) assumption of the invention is that preferably no de-standardization of the wheel rim is provided.

This special tire 1 described here, in any of the embodiments, may be mounted on any standard rim.

Therefore, the main chamber 16 is always inflated (and deflated) through the standard valve 30 (of the channel) of the rim.

The inflation pressure values preferably respect the following inequality:
bead chamber pressure> bead seat chamber pressure> main chamber pressure.

Such bead chamber pressure, bead seat chamber pressure, and main chamber pressure may be continuously adjusted/modulated when at least one of said bead seat valves 27, bead valve 28 and valve between chambers 29 are adjustable or controllable, thereby making such a tire an "active" component, which can be integrated into the electronic handling and comfort control systems of the vehicle.

### LIST OF REFERENCE SIGNS

1 tire
2 tire carcass
3 tread
4 shoulder
5 shoulder
6 flank
7 flank
8 external bead surface
9 external bead surface
10 bead
11 bead
12 edge
13 edge
14 channel
15 rim
16 main chamber
17 internal flank surface
18 external flank surface
19 bead seat wall
20 attachment portion
21 attachment portion
22 bead seat chamber
23 bead projection
24 bead resting surface
25 bead chamber
26 bead wall
27 bead seat valve
28 bead valve
29 valve between chambers
30 main valve
100 wheel
R-R radial direction orthogonal to the tread which rests entirely on the road
Y-Y direction transverse to the radial direction
A-A axial direction parallel to the vehicle wheel rotation axis
Ls static vertical load in straight running
Ld dynamic vertical load
Ly dynamic lateral load when cornering

## Claims

1. A tire (1) comprising:
- a tire carcass (2) on which a tread (3) with two opposite shoulders (4, 5) is arranged;
- from each shoulder (4 or 5), a flank (6 or 7) extends, ending in a bead (8 or 9) adapted to cooperate with an external bead surface (10 or 11) thereof with an edge (12 or 13) of a channel (14) of a rim (15) of a wheel (100) of a vehicle;
- said tread (3) and said flanks (6, 7) embrace a main chamber (16) on three sides;
- each of said flanks (6 or 7) comprises an internal flank surface (17);
- said tire (1) further comprises at least one bead seat wall (19) which is connected to two attachment portions (20, 21), separate from each other, of the internal surface (17) of at least one of said flanks (6 or 7), forming a bead seat chamber (22) with said at least one flank (6 or 7);
- wherein one of said attachment portions (20) is placed close to the bead (10 or 11) at which said at least one flank (6 or 7) ends; **characterized in that**
- said bead (10 or 11) placed close to said attachment portion (20) comprises a bead projection (23);
- said bead projection (23) protrudes from the opposite side of said external bead surface (8 or 9) into said main chamber (16);
- said bead projection (23) forms a bead resting surface (24) which is connected to said at least one flank (6 or 7) and faces said bead seat wall (19) so that when said tire (1) is statically and/or dynamically stressed by the rolling of the wheel (100) of a vehicle, it allows the support of said bead seat wall (19) on said bead resting surface (24) .

2. A tire (1) according to claim 1, wherein
- said bead seat wall (19) and said flank (6 or 7) form said bead seat chamber (22) entirely delimited by said bead seat wall (19) and said internal flank surface (17);
or wherein
- close to said bead (10 or 11), said bead seat wall (19) is connected to said flank (6 or 7) substantially in a direction orthogonal to said internal flank surface (17).

3. A tire (1) according to any one of the preceding claims, wherein
- said bead resting surface (24) is connected to said flank (6 or 7) substantially in a direction orthogonal to said internal flank surface (17);
or wherein
- only one flank (6 or 7) is connected to said bead seat wall (19); or wherein
- only one flank (6) is connected to said bead seat wall (19) and it is the external flank (6) which will be mounted on the rim (15) so as to remain on the side externally facing the vehicle on which the wheel (100) will be mounted.

4. A tire (1) according to any one of the preceding claims, wherein
- said bead projection (23) is hollow and forms a bead chamber (25), wherein said bead chamber (25) is closed by a bead wall (26);
or wherein
a bead seat valve (27) is provided for the inflation and deflation of the bead seat chamber (22);
and/or wherein
a bead seat valve (27) is provided for the inflation and deflation of the bead seat chamber (22); wherein said bead seat valve (27) crosses said flank (6 or 7) and allows the inflation and deflation of the bead seat chamber (22) from outside the tire (1) even when this is mounted on a rim (15);
and/or wherein
a bead seat valve (27) is provided for the inflation and deflation of the bead seat chamber (22); wherein said bead seat valve (27) crosses said bead seat wall (19) and allows the inflation and deflation of the bead seat chamber (22) from the interior of the main chamber (16).

5. A tire (1) according to claims 4, wherein
a bead valve (28) is provided for the inflation and deflation of the bead chamber (25);
and/or wherein
a bead valve (28) is provided for the inflation and deflation of the bead chamber (25); wherein said bead valve (28) crosses said flank (6 or 7) and allows the inflation and deflation of the bead chamber (25) from outside the tire (1) even when this is mounted on a rim (15) ;
and/or wherein
a bead valve (28) is provided for the inflation and deflation of the bead chamber (25); wherein said bead valve (28) crosses said bead wall (26) and allows the inflation and deflation of the bead chamber (25) from the interior of the main chamber (16).

6. A tire (1) according to any one of claims 4 to 5, wherein
a valve (29) between chambers is provided, which crosses said bead wall (26) and said bead seat wall (19), putting said bead chamber (25) and said bead seat chamber (22) into fluid connection for the inflation and deflation of the bead seat chamber (22);
and/or wherein
a valve (29) between chambers is provided, which crosses said bead wall (26) and said bead seat wall (19), putting said bead chamber (25) and said bead seat chamber (22) into fluid connection, wherein said valve (29) between chambers is a one-way valve for the inflation of the bead seat chamber (22).
and/or wherein
a bead seat valve (27) is provided for the deflation of the bead seat chamber (22); wherein said bead seat valve (27) crosses said bead seat wall (19) and is a one-way valve which allows the deflation of the bead seat chamber (22) in said main chamber (16).

7. A tire (1) according to any one of the preceding claims, wherein and at least one of said
- bead seat valve (27)
- bead valve (28)
- valve (29) between chambers
is an adjustable valve for setting the maximum pressure required by the bead seat chamber (22) and/or the bead chamber (25); or is a sensorized valve for detecting the pressure and/or temperature of the bead seat chamber (22) and/or of the bead chamber (25).

8. A wheel (100) of a vehicle, comprising at least one tire according to any one of claims 1 to 7 and a rim (15).

9. A wheel (100) according to claim 8, wherein said rim (15) is a standard rim provided with a main inflation and deflation valve (30) or a main valve for the inflation and deflation of the main chamber (16);
or wherein
said rim (15) comprises a rim channel (14) delimited by two opposite rim edges (12, 13); and wherein
said main chamber (16) is embraced by said tread (3), said flanks (6, 7), and said rim channel (14).

10. A method for inflating a tire (1), wherein
- providing a tire according to any one of claims 1 to 4 and 7, wherein the bead seat valve (27) is provided in said flank (6 or 7);
- providing a rim according to claim 12;
- inflating said bead seat chamber (22) before or after inflating said main chamber (16).

11. A method for inflating a tire (1), wherein
- providing a tire according to any one of claims 1 to 4 and 7, wherein the bead seat valve (27) is provided in said bead seat wall (19);
- providing a rim according to claim 12;
- inflating said bead seat chamber (22) and only then mounting said tire (1) on said rim (15);
- inflating said main chamber (16).

12. A method for inflating a tire (1) according to claim 10 or 11, wherein
- said bead seat chamber (22) is inflated at a higher pressure than said main chamber (16).

13. A method for inflating a tire (1), wherein
- providing a tire according to any one of claims 1 to 4 and 5 to 7, wherein the bead valve (28) is provided in said flank (6 or 7);
- providing a rim according to claim 12;
- inflating said bead chamber (25) before or after inflating said main chamber (16).

14. A method for inflating a tire (1), wherein
- providing a tire according to any one of claims 1 to 4 and 5 to 7, wherein the bead valve (28) is provided in said bead wall (26);
- providing a rim according to claim 12;
- inflating said bead chamber (25) and only then mounting said tire (1) on said rim (15);
- inflating said main chamber (16).

15. A method for inflating a tire (1) according to claim 10 or 11, wherein
- said bead chamber (25) is inflated at a higher pressure than said main chamber (16);
or
- said bead chamber (25) is inflated at a higher pressure than said bead seat chamber (22) and said bead seat chamber (22) is inflated at a higher pressure than said main chamber (16);
or
- said bead chamber (25) is inflated at a higher pressure than said main chamber (16) and said bead seat chamber (22), in order to obtain a high stiffness of the bead resting surface (24) and to act as an air tank for supplying and adjusting at least the bead seat chamber (22).
